# EUROPEAN PATENT SPECIFICATION

(11) **EP 2 136 493 B1**
(45) Date of publication and mention of the grant of the patent: **23.02.2011**
(21) Application number: 08011209.7
(22) Date of filing: 19.06.2008
(51) Int. Cl.: H04H 60/04

(54) **Audio mixing console**
Tonmischkonsole
Console de mixage audio

(43) Date of publication of application: 23.12.2009
(73) Proprietor: Harman Becker Automotive Systems GmbH, 76307 Karlsbad (DE)
(72) Inventor: Ayres, Richard, Welwyn Garden City AL73SR (GB)
(74) Representative: Bertsch, Florian Oliver

(56) References cited:
- US-A1- 2004 066 943
- US-A1- 2007 182 864
- US-A1- 2007 274 062

## Description

This invention relates to audio mixing consoles having a plurality of control elements.

The invention can be used in any system having a control module or a remote control. Furthermore, the invention may be applied in work station interfaces. Generally, the invention can be applied in any system where a plurality of different signals having different signal parameters should be controlled.

One example of a control module receiving different signals with a large variety of signal parameters is an audio mixing console.

### Background

Audio mixing consoles are used for applications such as multi track recording, broadcast, post production, live sound reinforcement and stage monitoring. The sound signal from microphones, electronic musical instruments or other sound sources enters the mixing console and the latter amplifies these sources as needed and allows the operator to mix them, equalize them and add effects according to the requirements of the installation. To this end, a plurality of control elements are provided, often configured as rotary buttons to control the different functions of the audio mixing console. With the mixing console a large variety of different features of a sound signal can be controlled. In order to limit the number of different control elements on the mixing console, it is possible to control different functions of the audio mixing console using one control element. In one operating mode, a control element is used for adjusting one feature of the recorded audio signal whereas in another operating mode, the same control element is used to adapt another feature of the mixing console. Furthermore, several control elements can be grouped to a group of control elements each group controlling a predetermined function of the audio signal. For the operator it can be sometimes difficult to identify where one group of control elements ends and where another group starts.

This problem exists for all control modules having many control elements, in which one control element may control different parameters of an input signal.

US 2004/0066943 A1 discloses a mixing console in which different operating elements are grouped into different groups using a fixed colour, such as coloured seals in order to identify the different members of a group.

US 2007/0274062 A1 discloses a slide controller for an audio mixer, an illumination element being provided flashing in different colours depending on the function that it currently performs or influences.

### Summary

Accordingly, a need exists to provide a mixing console in which the operator can easily differentiate the different groups of control elements for different operating modes of the console. This need is met by the features of the independent claims. In the dependent claims, preferred embodiments of the invention are described.

According to the invention, a mixing console is provided comprising the features of claim 1. It is comprising a plurality of control elements wherein a control element is configured in such a way that different functions of the control module are controlled by one control element. The control elements are furthermore grouped into different groups of control elements each group controlling a predetermined function of the control module. For better delimiting the different groups, an illumination system is provided comprising illuminated control dividing surfaces which visually separate one group of control elements from another group of control elements wherein the illumination system illuminates the control dividing surfaces depending on the separation of the control elements into different groups. The illuminated control dividing surfaces make it clearer to the operator where one type of control function ends and where another starts. When the operating mode of the different control elements changes and the control elements take over other functions, the illuminated control dividing surfaces will be adapted accordingly to represent the new control groupings. By way of example, the illuminated control dividing surfaces may be turned on or off to delimit the new control groups.

The illumination system comprises a plurality of different control dividing surfaces which can be illuminated separately. By turning on and off the different illuminating control dividing surfaces the grouping of the control elements is visualized to the operator of the control module.

A control dividing surface may be illuminated by a light source. However, it is also possible that several control dividing surfaces are illuminated by the same light source. In case several control dividing surfaces are illuminated by the same light source opaque covers can be used for the different control dividing surfaces to individually control the illumination of each control dividing surface.

Preferably, the control dividing surface is an elongated area in a control surface of the control module, the control surface being the surface on which the control elements are provided. By way of example, the control dividing surface may be composed of a light pipe with a through hole in the control surface, the through hole building the illuminated surface visible by the operator of the control module.

According to the invention, the control dividing surface separates one group of control elements from another group of control elements.

Furthermore, it is possible that the control dividing surfaces are provided in the control surface of the control module in such a way that neighbouring control dividing surfaces build a combined control dividing surface. This may be helpful when a group of control elements contains different subgroups. In order to more easily differentiate different subgroups and to differentiate the subgroups from other (main) groups, control dividing surfaces of different surface areas can be used. By way of example, the combined control dividing surface built from two neighbouring control dividing surfaces can separate control elements of two different main groups whereas the non-combined control dividing surface, which has a smaller surface area separates two subgroups belonging to one main group.

### Brief Description of the Drawings

In the following the invention will be described in more detail with reference to the accompanying drawings, in which
Fig. 1 shows part of a control module surface with different control elements and control dividing surfaces separating different groups of control elements,
Fig. 2 shows part of a control module surface with control dividing surfaces according to another embodiment,
Fig. 3 shows part of a control module with control dividing surfaces according to a further embodiment,
Fig. 4 shows part of a control module with control dividing surfaces according to an embodiment not forming part of the invention.
Fig. 5 shows part of a control module surface with control dividing surfaces according to another embodiment, and
Fig. 6 shows a side view cross section showing the control dividing surface in more detail.

### Detail Description of Preferred Embodiments

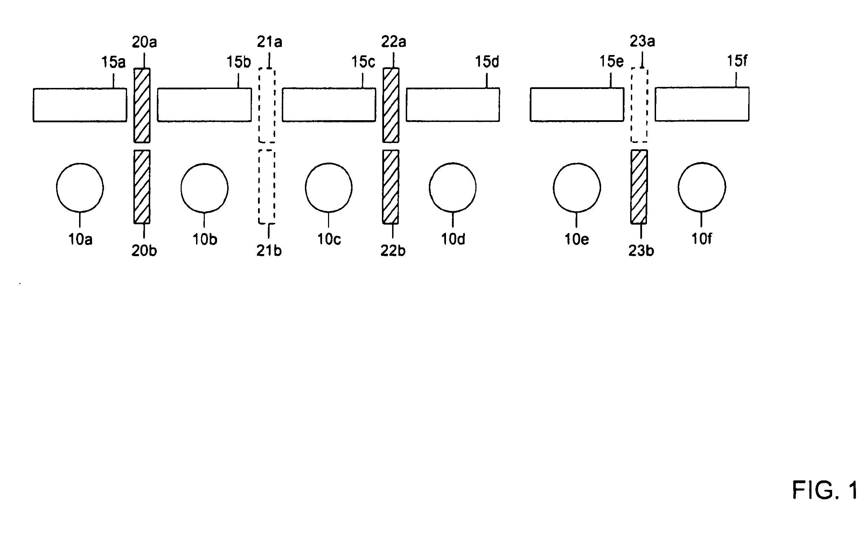

Fig. 1 shows a section of a control module such as an audio mixing console, the mixing console comprising a plurality of different control elements 10. In the embodiment shown, six different control elements 10a to 10f are shown. For each control element 10a to 10f a display element 15a to 15f may be provided, the display elements indicating to the operator the function controlled by the respective control element. By way of example, in an equalizer mode, the display element may indicate the adjusted gain for each sub band. It should be understood that the display elements can be provided but they need not necessarily be provided. Between two control elements, a control dividing surface 20 may be provided. The control dividing surface can be illuminated by a light source not shown in Fig. 1, e.g. a light emitting diode LED, the control dividing surfaces visually separating one group of control elements from another group of control elements. In the example shown in Fig. 1 different groups of control elements are provided. The first group of control elements is presented by control element 10a used for adjusting a first predetermined function or parameter of the mixing console. The second group, in the embodiment shown, consists of control element 10b and 10c, whereas a third group comprises the element 10d, 10e and 10f. In order to make it clearer to the operator where one type of control element ends and where another type of control element starts, the control dividing surfaces are provided which can be illuminated depending on the separation of the control elements into groups. In the embodiment shown in Fig. 1 two control dividing surfaces 20a and 20b are provided next to each other indicating that the group comprising control element 10a ends at this control dividing surface whereas another group comprising the control elements 10b and 10c starts at this control dividing surfaces. The shaded area 20a and 20b indicate that the control dividing surface is illuminated. Between control elements 10b and 10c control dividing surfaces 21a and 21b are provided which are shown in dashed lines, the dashed lines indicating that these control dividing surfaces are not illuminated. As another group of control elements ends at control element 10c, the control dividing surfaces 22a and 22b are illuminated again indicating to the operator that another group of control elements starts. In the embodiment shown in Fig. 1, the group comprising the control elements 10d, 10e and 10f contains two subgroups, one subgroup containing the control elements 10d and 10e and another subgroup containing the control element 10f. In order to indicate to the operator that there is sub-dividing of one group, e.g. between equalizing bands in an equalizing mode, only the control dividing surface 23b is illuminated whereas the control dividing surface 23a is not illuminated. When the user looks onto the mixing console as shown in Fig. 1 it becomes clear that the control elements 10a to 10f are from three different groups and that for one group two different subgroups exist. In this example, the two neighbouring control dividing surfaces 20a and 20b or 22a, 22b, 23a, 23b build a combined control dividing surface, whereas one part of the combined control dividing surface 23b separates two subgroups.

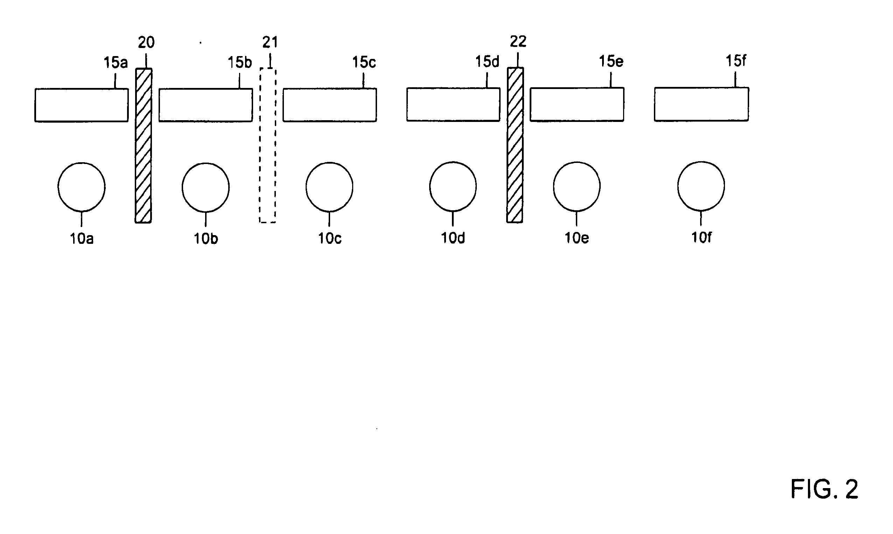

In Fig. 2 another embodiment is shown showing a similar embodiment to the one shown in Fig. 1. The same elements are referenced by the same reference numerals. In this embodiment, the different control elements are separated by a one-piece control dividing surface such as the surfaces 20 to 22. In the embodiment shown, control elements 10b to 10d build one group and control elements 10e and 10f or control element 10a build other groups respectively. In this example, the control dividing surfaces 20 and 22 are illuminated in order to more clearly show which group a control element belongs to.

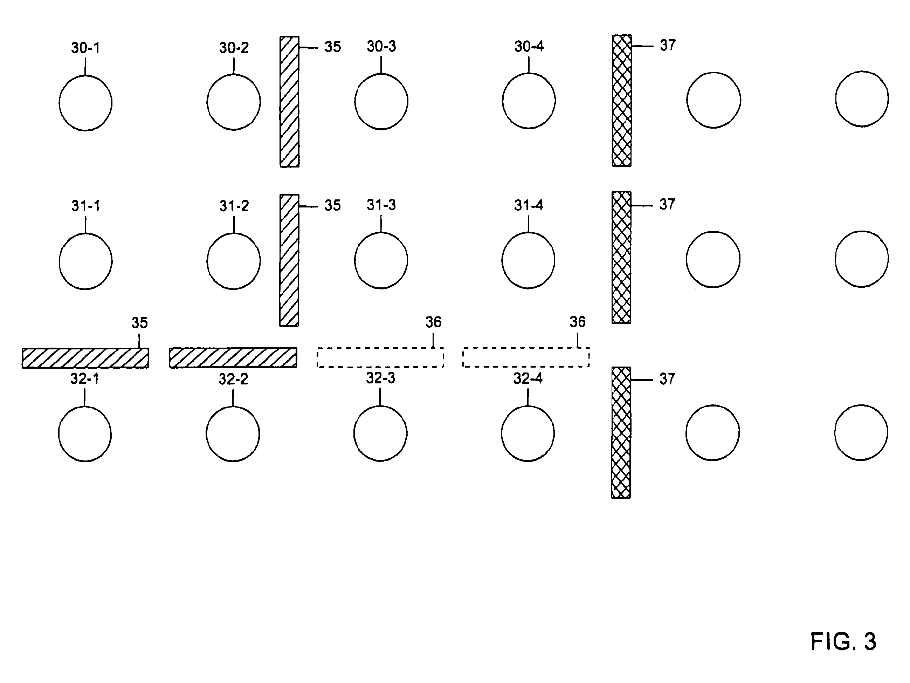

In Fig. 3 another mixing console with different control elements 30, 31 and 32 is shown. In this embodiment, the control elements are shown in a matrix form, the first row of control elements being designated as control element 30-1, 30-2, 30-3..., The second row comprising the control element 31-1, 31-2, 31-3 etc.. Between the different control elements control dividing surfaces can be provided. In the embodiment shown in Fig. 3, only some of the control dividing surfaces are shown. In this embodiment, the control elements 30-1, 30-2, 31-1 and 31-2 build one group of control elements whereas other control elements such as control element 30-3, 30-4, 31-3 and 31-4 and 32-1 to 32-4 build another group. For better delimiting different groups, control dividing surfaces 35 are illuminated whereas other control dividing surfaces such as the surfaces 36 are not illuminated. The control dividing surface 37 separating the control element 30-4, 31-4 and 32-4 from the other control elements may be illuminated in the same way as the control dividing surfaces 35. However, it is also possible that the control dividing surfaces 37 are illuminated in another colour than the control dividing surfaces 35 as indicated by the differently hedged areas.

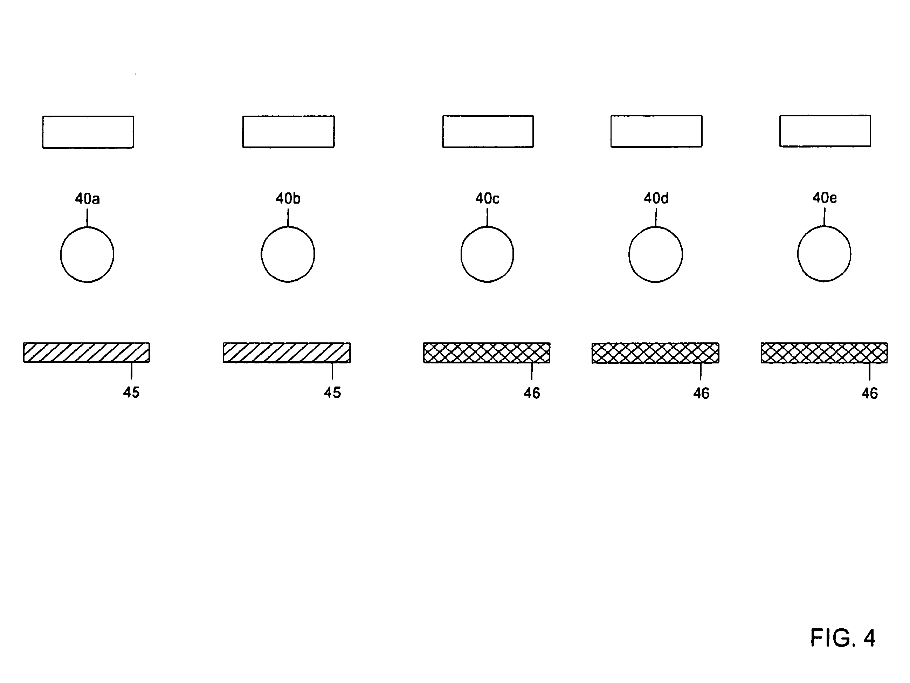

In the embodiment 4 not forming part of the invention it is shown that the control dividing surfaces can also be used to group the different control elements together using different colours. In the embodiment shown in Fig. 4, the control dividing surfaces are not used for separating different control elements from one another but they are used to show which of the control elements belong together using different colours. In the embodiment shown, the control elements 40a and 40b belong to the same group so that they are illuminated by control dividing surfaces 45 having the same colour whereas the control dividing surfaces 46 illuminating the different elements 40c, 40d and 40e are illuminated in another colour indicating that these three control elements belong to another group.

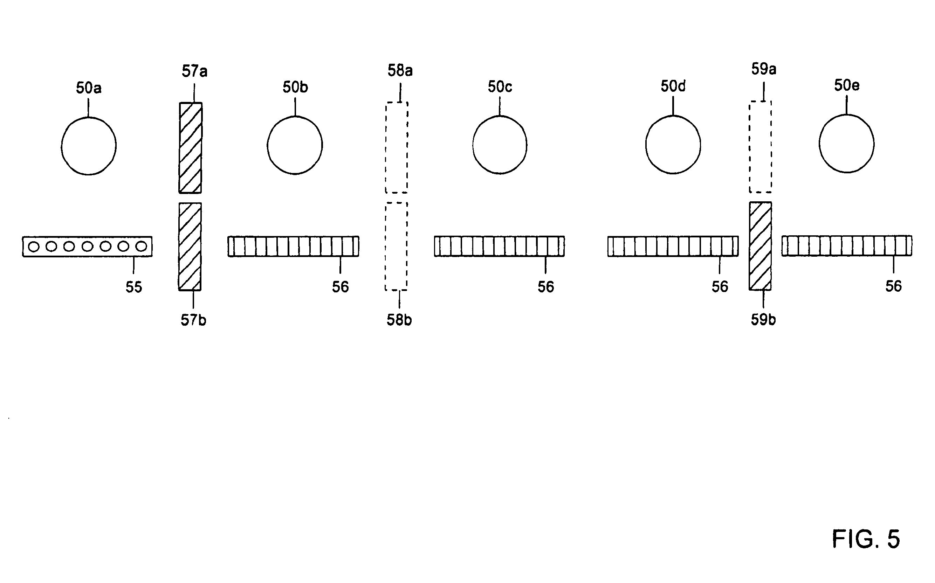

In Fig. 5 an embodiment is shown combining the embodiment shown in Figs. 1, 2 with the embodiment shown in Fig. 4. Control elements 50a to 50e are provided in which control element 50a belongs to one group whereas control elements 50b to 50e belong to another group of control elements. The horizontal control dividing surfaces are illuminated in different colours indicating which group the respective control element belongs to. The control dividing surface 55 is illuminated in one colour whereas the control dividing surfaces 56 are illuminated in another colour indicating that all these control elements belong to another group. Furthermore, vertical control dividing surfaces are provided underlining the difference between the different groups. As control element 50a belongs to another group than control element 50b, the vertical control dividing surfaces 57a and 57b are illuminated whereas the vertical control dividing surfaces 58a and 58b are not illuminated as control elements 50b and 50c belong to the same group. The group of control elements shown by the horizontal control dividing surfaces 56 comprises two sub-groups, one sub-group containing control elements 50b, c, d and another subgroup containing control element 50e. As control elements 50d and 50e belong to the same main group, they are illuminated by the same colour as shown by the illuminated surface 56. Due to the fact that these elements belong to different subgroups, the control dividing surface 59b is illuminated whereas the control dividing surface 59a is not illuminated indicating the division into subgroups.

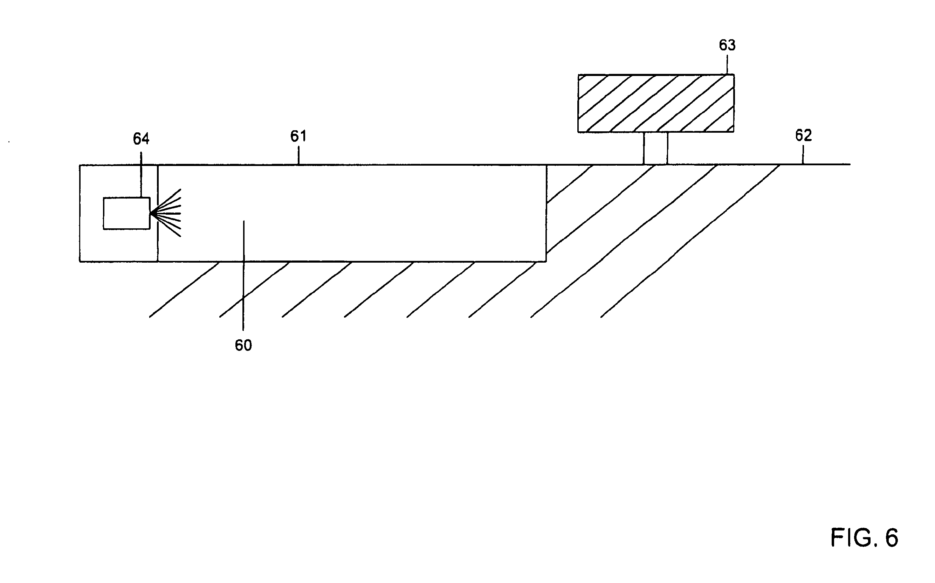

In Fig. 6 a schematic partial sectional view of the mixing console is shown. The illuminated surface can be obtained by providing light pipes 60 with a through hole 61 at the upper surface of the light pipes, the through hole being provided on the control surface 62 of the mixing console. The light pipes can be illuminated by a light source 64 which can be either situated below the light pipe 60 or as in the embodiment shown in Fig. 6 next to the light pipe. The through hole 61 can be covered by a light permeable cover such as glass. The different colours used to illuminate the control dividing surface in different colours can be obtained by either using light sources emitting different colours or by a light source and by the use of different filters. The colours may follow the VI6 format.

Summarizing, as explained above, the illumination system is used to "segment" a physical control surface in order to make it clearer to the operator where one type of control ends and another starts. Colour may be used to enhance the effect.

## Claims

1. An audio mixing console comprising:
- a plurality of control elements (10, 30, 40, 50), wherein a control element is configured in such a way that different functions of the audio mixing console are controlled by one control element in different operating modes of the audio mixing console, wherein the control elements are grouped into different groups of control elements, each group controlling a predetermined function of the mixing console,
- an illumination system providing illuminated control dividing surfaces (20, 35, 37, 45, 55) which visually separate one group of control elements from another group of control elements, wherein the illumination system illuminates the control dividing surfaces depending on the separation of the control elements into different groups, **characterized in that** the illumination system comprises a plurality of different control dividing surfaces which can be illuminated separately, wherein in case of an operating mode change, the illumination system is configured such that the illuminated control dividing surfaces are adapted accordingly to represent the new separation into different groups, wherein said control dividing surface (20) provided between the control elements separates one group of control elements from another group of control elements

2. The mixing console according to claim 1, wherein each control dividing surface (20, 35, 37, 45, 55) is illuminated by a light source (64).

3. The mixing console according to any of the preceding claims, wherein the control dividing surface is an elongated area in a control surface (62) of the audio mixing console where the control elements are provided.

4. The mixing console according to any of the preceding claims, wherein the control dividing surface is a light pipe (60) with a through hole (61) in a control surface (62) where the control elements are provided.

5. The mixing console according to any of the preceding claims, wherein the control dividing surfaces are provided in a control surface of the audio mixing console in such a way that neighbouring control dividing surfaces (20a, 20b) build a combined control dividing surface.

6. The mixing console according to claim 5, wherein, when one group of control elements is separated into at least two subgroups, the subgroups of said one group are separated by one control dividing surface, whereas two different groups are separated by said combined control dividing surface.

7. The mixing console according to any of the preceding claims, wherein the illumination system illuminates the control dividing surfaces in different colours, the colour indicating to which of the groups the control element belongs to.

8. The mixing console according to claim 7, wherein the colours follow the Vi6 format.

## Patentansprüche

1. Tonmischkonsole umfassend:
- mehrere Steuerelemente (10, 30, 40, 50), wobei ein Steuerelement in einer Art und Weise ausgestaltet ist, dass unterschiedliche Funktionen der Tonmischkonsole durch ein Steuerelement in unterschiedlichen Betriebsarten der Tonmischkonsole gesteuert werden, wobei die Steuerelemente in unterschiedlichen Gruppen von Steuerelementen gruppiert sind, wobei jede Gruppe eine vorbestimmte Funktion der Mischkonsole steuert,
- ein Beleuchtungssystem, welches beleuchtete Steuerungsteilungsflächen (20, 35, 37, 45, 55) bereitstellt, welche eine Gruppe von Steuerelementen optisch von einer weiteren Gruppe von Steuerelementen trennen, wobei das Beleuchtungssystem die Steuerungsteilungsflächen in Abhängigkeit von der Trennung der Steuerelemente in unterschiedliche Gruppen beleuchtet, **dadurch gekennzeichnet, dass** das Beleuchtungssystem mehrere unterschiedliche Steuerungsteilungsflächen umfasst, welche getrennt beleuchtet werden können, wobei im Fall eines Betriebsartwechsels das Beleuchtungssystem derart ausgestaltet ist, dass die beleuchteten Steuerungsteilungsflächen dementsprechend angepasst werden, um die neue Trennung in unterschiedliche Gruppen darzustellen, wobei die Steuerungsteilungsfläche (20), welche zwischen den Steuerelementen vorgesehen ist, eine Gruppe von Steuerelementen von einer anderen Gruppe von Steuerelementen trennt.

2. Mischkonsole nach Anspruch 1, wobei jede Steuerungsteilungsfläche (20, 35, 37, 45, 55) durch eine Lichtquelle (64) beleuchtet wird.

3. Mischkonsole nach einem der vorhergehenden Ansprüche, wobei die Steuerungsteilungsfläche ein länglicher Bereich in einer Steuerfläche (62) der Tonmischkonsole ist, wo die Steuerelemente vorgesehen sind.

4. Mischkonsole nach einem der vorhergehenden Ansprüche, wobei die Steuerungsteilungsfläche ein Lichtleiter (60) mit einem Durchgangsloch (61) in einer Steuerfläche (62), wo die Steuerelemente vorgesehen sind, ist.

5. Mischkonsole nach einem der vorhergehenden Ansprüche, wobei die Steuerungsteilungsflächen in einer Steuerfläche der Tonmischkonsole in einer derartigen Art und Weise vorgesehen sind, dass benachbarte Steuerungsteilungsflächen (20a, 20b) eine kombinierte Steuerungsteilungsfläche aufbauen.

6. Mischkonsole nach Anspruch 5, wobei, wenn eine Gruppe von Steuerelementen in mindestens zwei Teilgruppen geteilt wird, die Teilgruppen der einen Gruppe durch eine Steuerungsteilungsfläche getrennt werden, wobei zwei unterschiedliche Gruppen durch die kombinierte Steuerungsteilungsfläche getrennt werden.

7. Mischkonsole nach einem der vorhergehenden Ansprüche, wobei das Beleuchtungssystem die Steuerungsteilungsflächen in unterschiedlichen Farben beleuchtet, wobei die Farbe anzeigt, zu welcher der Gruppen das Steuerelement gehört.

8. Mischkonsole nach Anspruch 7, wobei die Farben das Vi6-Format einhalten.

## Revendications

1. Table de mixage audio comprenant:
- une pluralité d'éléments de contrôle (10, 30, 40, 50), dans laquelle un élément de contrôle est configuré de telle manière que des fonctions différentes de la table de mixage audio soient contrôlées par un élément de contrôle dans des modes opératoires différents de la table de mixage audio, dans laquelle les éléments de contrôle sont regroupés dans des groupes différents d'éléments de contrôle, chaque groupe contrôlant une fonction prédéterminée de la table de mixage,
- un système d'illumination fournissant des surfaces de division de contrôle illuminées (20, 35, 37, 45, 55) séparant visuellement un groupe d'éléments de contrôle d'un autre groupe d'éléments de contrôle, dans lequel le système d'illumination illumine la surface de division de contrôle en fonction de la séparation des éléments de contrôle dans des groupes différents,
**caractérisée en ce que** le système d'illumination comprend une pluralité de surfaces de division de contrôle différentes aptes à être illuminées séparément, dans lequel, en cas d'un changement de mode opératoire, le système d'illumination est configuré de telle manière que les surfaces de division de contrôle illuminées soient adaptées correspondamment pour représenter la nouvelle séparation en groupes différents, dans lequel ladite surface de division de contrôle (20) prévue entre les éléments de contrôle sépare un groupe d'éléments de contrôle d'un autre groupe d'éléments de contrôle.

2. Table de mixage selon la revendication 1, dans laquelle chaque surface de division de contrôle (20, 35, 37, 45, 55) est illuminée par une source de lumière (64).

3. Table de mixage selon l'une quelconque des revendications précédentes, dans laquelle la surface de division de contrôle est une zone allongée dans une surface de contrôle (62) de la table de mixage audio où les éléments de contrôle sont prévus.

4. Table de mixage selon l'une quelconque des revendications précédentes, dans laquelle la surface de division de contrôle est un tube optique (60) avec un trou traversant (61) dans une surface de contrôle (62) où les éléments de contrôle sont prévus.

5. Table de mixage selon l'une quelconque des revendications précédentes, dans laquelle les surfaces de division de contrôle sont prévues dans une surface de contrôle de la table de mixage audio de telle manière que des surfaces de division de contrôle (20a, 20b) adjacentes construisent une surface de division de contrôle combinée.

6. Table de mixage selon la revendication 5, dans laquelle, lorsqu'un groupe d'éléments de contrôle est subdivisé en au moins deux sous-groupes, les sous-groupes dudit un groupe sont séparés par une surface de division de contrôle, alors que deux groupes différents sont séparés par ladite surface de division de contrôle combinée.

7. Table de mixage selon l'une quelconque des revendications précédentes, dans laquelle le système d'illumination illumine les surfaces de division de contrôle par des couleurs différentes, la couleur indiquant le groupe auquel appartient l'élément de contrôle.

8. Table de mixage selon la revendication 7, dans laquelle les couleurs suivent le format V16.
